(19) Europäisches Patentamt
European Patent Office
Office européen des brevets

(11) **EP 1 539 558 B1**

(12) **EUROPÄISCHE PATENTSCHRIFT**

(45) Veröffentlichungstag und Bekanntmachung des Hinweises auf die Patenterteilung:
**23.01.2008 Patentblatt 2008/04**

(21) Anmeldenummer: **03729815.5**

(22) Anmeldetag: **25.03.2003**

(51) Int Cl.:
**B62D 5/04** *(2006.01)*

(86) Internationale Anmeldenummer:
**PCT/DE2003/000970**

(87) Internationale Veröffentlichungsnummer:
**WO 2003/086836 (23.10.2003 Gazette 2003/43)**

(54) **SPIELFREIES LENKGETRIEBE**

STEERING GEAR WHICH IS FREE FROM BACKLASH

ENGRENAGE DE DIRECTION SANS JEU

(84) Benannte Vertragsstaaten:
**DE FR GB IT**

(30) Priorität: **17.04.2002 DE 10217123**

(43) Veröffentlichungstag der Anmeldung:
**15.06.2005 Patentblatt 2005/24**

(73) Patentinhaber:
• **ROBERT BOSCH GMBH**
**70442 Stuttgart (DE)**
• **ZF Lenksysteme GmbH**
**73522 Schwäbisch Gmünd (DE)**

(72) Erfinder:
• **BOCK, Michael**
**81673 Muenchen (DE)**

• **NAGEL, Willi**
**71686 Remseck/Hochdorf (DE)**
• **BRENNER, Peter**
**73563 Moegglingen (DE)**

(56) Entgegenhaltungen:
WO-A-99/65758            DE-A- 10 051 306
DE-A- 19 518 194

• PATENT ABSTRACTS OF JAPAN vol. 2000, no. 05, 14. September 2000 (2000-09-14) & JP 2000 043739 A (KOYO SEIKO CO LTD), 15. Februar 2000 (2000-02-15)

**Beschreibung**

Stand der Technik

Die Erfindung betrifft ein Schneckengetriebe für eine Fahrzeuglenkung mit einer auf einer Welle drehfest angeordneten Schnecke und mit einem mit der Schnecke kämmenden Schneckenrad, wobei Schnecke und Schneckenrad in radialer Richtung vorgespannt sind.

Konventionelle Fahrzeuglenkungen, Fahrzeuglenkungen mit Überlagerungsgetriebe und Steer-by-Wire-Lenkanlagen erfordern ein oder mehrere Lenkgetriebe mit denen die Drehbewegung des Lenkrads in eine Drehbewegung der gelenkten Räder umgesetzt wird.

Bei konventionellen elektrischen Servolenkungen muss zusätzlich ein von einem Elektromotor aufgebrachtes Drehmoment in die Lenkung eingekoppelt werden.

Bei einer Steer-by-Wire-Lenkanlage besteht keine mechanische oder hydraulische Verbindung zwischen Lenkrad und gelenkten Rädern. Ein Lenksteller regelt die Stellung der gelenkten Räder in Abhängigkeit des Fahrerlenkwunsches und anderer Größen wie z. B. Gierrate oder Fahrgeschwindigkeit. Die Lenkbewegung der gelenkten Räder ist frei programmierbar und die gesamte Lenkarbeit wird durch den elektrischen oder hydraulischen Lenksteller aufgebracht.

Bei Fahrzeuglenkungen mit Überlagerungsgetriebe wird eine konventionelle Lenkung mit einem Überlagerungsgetriebe kombiniert, um Lenkeingriffe unabhängig vom Fahrerlenkwunsch vornehmen zu können. Damit werden die Eigenschaften einer Steer-by-Wire-Lenkanlage weitestgehend erreicht. Bei diesen Überlagerungsgetrieben ist Spiel unerwünscht, da es das Lenkgefühl verschlechtert, die Präzision von Lenkeingriffen verringert und sich außerdem beim Wechsel der Drehrichtung durch "Knackgeräusche" unangenehm bemerkbar macht.

Zu den oben genannten Zwecken werden oft Schneckengetriebe mit Elektromotor eingesetzt, da diese in der Regel selbsthemmend sind und somit der Elektromotor stromlos geschaltet werden kann, wenn sich das Schneckengetriebe nicht drehen soll.

Aus der den oberbegriff des Anspruchs 1 bildenden WO 99/65758 A ist ein Schneckengetriebe für eine Fahrzeuglenkung bekannt bei dem die Schnecke axial verschiebbar ist und durch eine Feder gegen das Schneckenrad gedrückt wird.

Aus der JP 2000043739 A ist ein Schneckengetriebe für eine Fahrzeuglenkung bekannt bei dem das Schneckenrad radial verschiebbar ist und durch eine Feder gegen die Schnecke gedrückt wird. Bei beiden Schneckengetrieben wird dadurch ein spielfreier Lauf des Schneckengetriebes erreicht.

Aus der DE 195 18 194 A1 ist ein Schneckengetriebe bekannt bei dem der Wälzpunkt in Richtung eines Antriebsmotors der Schnecke verlagert ist. Dadurch ist es erforderlich die Schnecke als Globoid-Schnecke auszubilden und es ergeben sich unterschiedliche Flankenwinkel in der Verzahnung von Schneckenrad und Schnecke. Diese Flankenwinkel sind durch die Wälzpunktverschiebung bedingt.

Aus der nachveröffentlichten DE 100 51 306 A1 der Robert Bosch GmbH ist ein Getriebe für eine Fahrzeuglenkung bekannt bei dem die Welle, auf der die Schnecke eines Schneckengetriebes befestigt ist, in radialer Richtung verschwenkbar gelagert ist. Eines der beiden Lager ist in radialer Richtung verschiebbar. Durch das Aufbringen einer Federkraft in radialer Richtung wird die Welle um ein Festlager verschwenkt und somit ein spielfreier Eingriff der Schnecke im Schneckenrad gewährleistet.

Wenn der elektrische Antrieb des Schneckengetriebes nicht angesteuert wird, soll das Schneckengetriebe selbsthemmend sein, damit die Lenkbewegungen vom Lenkrad direkt und unverändert auf die gelenkten Räder übertragen werden.

Vorteile der Erfindung

Bei einem Schneckengetriebe mit den Merkmalen des Anspruchs 1 ist die Selbsthemmung des Schneckengetriebes unabhängig von der Orientierung eines bei ausgeschaltetem Elektromotor auf das Schneckenrad wirkenden Moments. Das Verhalten des Scheckengetriebes ist somit auch bei stromlos geschaltetem Elektromotor drehrichtungsunabhängig.

Dadurch wird die Funktionssicherheit einer mit einem erfindungsgemäßen Schneckengetriebe ausgerüsteten Lenkanlage für Fahrzeuge, insbesondere auch dann wenn der Elektromotor oder ein Steuergerät ausgefallen ist, erhöht. Dieser Vorteil ist von erheblicher Bedeutung, da Lenkanlagen auch dann noch funktionsfähig sein müssen, wenn Teile der elektrischen Anlage des Fahrzeugs ausfallen.

Bei einer Variante der Erfindung ist vorgesehen, dass die Welle in einem Gehäuse mittels eines Festlagers und mindestens eines Loslagers gelagert ist, und dass das oder die Loslager in radialer Richtung im Gehäuse verschiebbar sind, und/oder dass das Gehäuse ein Langloch zur Aufnahme des Loslagers aufweist, und dass die Längsachse des Langlochs in radialer Richtung verläuft. Bei dieser Variante ist die Schwenkbewegung der Welle durch das Langloch vorgegeben. Ein Ausweichen der Welle in tangentialer Richtung ist nicht möglich. Weiterhin ist ein Langloch fertigungstechnisch einfach herzustellen. In weiterer Ergänzung der Erfindung stützt sich das Loslager über einen Stützring gegen das Gehäuse ab, so dass das Loslager nicht mit oder linienförmigen Radiallasten beaufschlagt wird und die Führung des Loslagers im Gehäuse verbessert wird.

In weiterer Ergänzung der Erfindung ist zwischen Loslager und Gehäuse oder zwischen Stützring und Gehäuse mindestens ein Federelement, insbesondere eine Spiralfeder oder eine Tellerfeder, vorgesehen, so dass auf einfache und kostengünstige Weise eine definierte Vorspannung zwischen Schnecke und Schneckenrad bzw. Zahnstange einstellbar ist. Die Vorspannkraft hängt dabei im Wesentlichen von der Federrate des oder der Federelemente ab und nur in geringem Umfang von der Fertigungstoleranz des Stützrings und des Gehäuses ab.

Bei einer besonders vorteilhaften Ausgestaltung der Erfindung ist das Loslager über eine Blattfeder mit dem Gehäuse verbunden und erstreckt sich die Blattfeder senkrecht zur Längsachse der Welle und senkrecht zu der Richtung in der das Loslager verschiebbar ist zwischen Gehäuse und Loslager. Die Blattfeder wird so am Gehäuse befestigt, dass die gewünschte Anpresskraft zwischen Schnecke und Schneckenrad erreicht wird. Bei dieser Ausführungsform wird die Zahl der Bauteile reduziert, da die Blattfeder sowohl Feder- als auch Führungsfunktionen übernimmt. Außerdem ist dies Ausführung sehr einfach zu montieren.

Bei einer anderen Ausgestaltung der Erfindung ist zwischen Loslager und Gehäuse oder zwischen Stützring und Gehäuse eine Verdrehsicherung angebracht, so dass das Loslager sich nicht im Gehäuse drehen kann, was zu Funktionsbeeinträchtigungen führen könnte.

Bei einer weiteren Ergänzung der Erfindung ist die Schnecke auf der Rotorwelle eines Elektromotors drehfest angeordnet, so dass die Zahl der Bauteile reduziert wird und eine besonders kompakte Bauweise des erfindungsgemäßen Getriebes möglich wird.

Damit bei einem in Extremfällen möglichen Verlust der Selbsthemmung die Auswirkungen auf die Funktionsfähigkeit und das Betriebsverhalten der Fahrzeuglenkung minimiert werden, ist weiter vorgesehen das Scheckengetriebe über den Elektromotor zu arretieren. Diese Arretierung des Schneckengetriebes kann entweder aktiv durch den Aufbau eines Gegenmoments des Elektromotors oder passiv durch Kurzschließen von mindestens zwei Phasen des Elektromotors erreicht werden. Das passive Arretieren erfolgt dadurch, dass mindestens zwei Phasen des Elektromotors kurzgeschlossen und von der Spannungsversorgung getrennt werden, wenn sich der Elektromotor nicht drehen soll. Wenn der Elektromotor in diesem Zustand trotz der Selbsthemmung des Schneckengetriebes angetrieben wird, baut der Elektromotor wegen der kurzgeschlossenen Phasen ein Bremsmoment auf. Dadurch wird die ungewollte Drehbewegung stark verringert.

Vorteilhafterweise erfolgt das passive Arretieren durch Kurzschließen von mindestens zwei Phasen des Elektromotors durch ein Relais oder durch FET-Halbleiterelemente.

Die aktive und passive Arretierung des Schneckengetriebes kann auch unabhängig von der erfindungsgemäßen asymmetrischen Verzahnung bei anderen elektrischen Antrieben, vorzugsweise mit Untersetzungsgetriebe, eingesetzt werden.

Schließlich kann das erfindungsgemäße Getriebe in einer Servoeinheit einer elektrischen Servolenkung, in einem Zahnstangenlenkgetriebe, in einem Lenksteller mit Überlagerungsgetriebe oder als elektromotorischer Lenksteller einer Steer-by-Wire-Lenkanlage eingesetzt werden.

Weitere Vorteile und vorteilhafte Ausgestaltungen der Erfindung sind der nachfolgenden Zeichnung und deren Beschreibung entnehmbar.

Zeichnung

Ausführungsbeispiele der Erfindung sind in der Zeichnung dargestellt und nachfolgend beschrieben. Es zeigen:

Figur 1 ein erstes Ausführungsbeispiel eines erfindungsgemäßen Schneckengetriebes mit Außenverzahnung;

Figur 2 ein zweites Ausführungsbeispiel eines erfindungsgemäßen Schneckengetriebes;

Figur 3 ein Detail einer ersten Ausführungsform einer erfindungsgemäßen Wellenlagerung und

Figur 4 ein Detail einer zweiten Ausführungsform einer erfindungsgemäßen Wellenlagerung.

Beschreibung der Erfindung

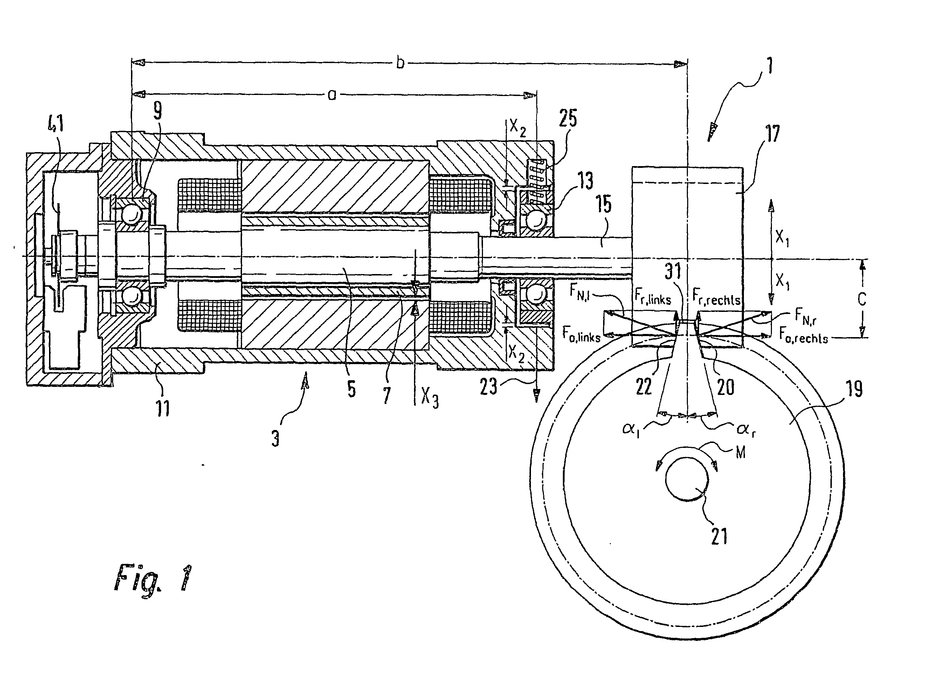

In Figur 1 ist ein erstes Ausführungsbeispiel eines erfindungsgemäßen Schneckengetriebes 1 dargestellt. Das Getriebe 1 besteht aus einem Elektromotor 3 mit einer Welle 5, die einen Rotor 7 trägt. Die Welle 5 ist an ihrem einen Ende mit einem nur schematisch dargestellten Festlager 9 in einem Gehäuse 11 des Elektromotors 3 gelagert. Am entgegengesetzten Ende des Elektromotors 3 ist ein Loslager 13 vorhanden. Auf einem Wellenstumpf 15 der Welle 5 ist eine Schnecke 17 drehfest befestigt (nicht dargestellt) Die Schnecke 17 ist somit fliegend auf der Welle 5 gelagert und kämmt mit einem Schneckenrad 19, welches auf einer Abtriebswelle 21 befestigt ist. Die Lagerung der Abtriebswelle 21 ist in Figur 1 nicht dargestellt. Um Spiel in der Verzahnung zwischen Schnecke 17 und Schneckenrad 19 zu verhindern, kann die Welle 5 um das Festlager 9 in Richtung der Pfeile $X_1$ verschwenkt werden. Die Schwenkbewegung der Welle 5 wird dadurch ermöglicht, dass das Loslager 13 in Richtung des Schneckenrads 19 verschiebbar im Gehäuse 11 befestigt ist. Die Richtung in der das Loslager 13 samt Welle 5 verschoben werden kann ist durch einen Pfeil 23 dargestellt.

Ein als Spiralfeder ausgebildetes Federelement 25 presst die Schnecke 17 auf das Schneckenrad 19, so dass eine spielfreie Übertragung der Drehbewegung des Elektromotors 3 auf die Abtriebswelle 21 erfolgt. Federrate und Vorspannung des Federelements 25 sind so zu bemessen, dass, unabhängig von der Drehrichtung und dem Drehmoment des Elektromotors 3, die zwischen den Zahnflanken der Schnecke 17 und des Schneckenrads 19 auftretenden Kräfte die Welle 5 nicht entgegen der Federkraft des Federelements 25 verschwenken können. Andererseits ist darauf zu achten, dass die Federkraft des Federelements 25 nicht größer als nötig ist, um zu verhindern, dass das erfindungsgemäße Getriebe schwergängig wird und der Verschleiß unnötig groß ist.

Um die Funktion des Elektromotors 3 sicherzustellen, ist es notwendig, dass der Verschwenkweg $X_2$ des Loslagers 13 so bemessen ist, dass der Rotor 7 nicht an einem Stator 27 des Elektromotors schleifen kann. Außerdem ist darauf zu achten, dass eventuell vorhandene Bürsten (nicht dargestellt) des Elektromotors 3 oder Drehwinkelsensoren 41 durch das Verschwenken der Welle 5 in ihrer Funktion nicht beeinträchtigt werden. Dies bedeutet, dass der Spalt $X_3$ zwischen Rotor 7 und Stator 27 so bemessen sein muss, dass keine Berührung zwischen Rotor 7 und Stator 27 stattfinden kann.

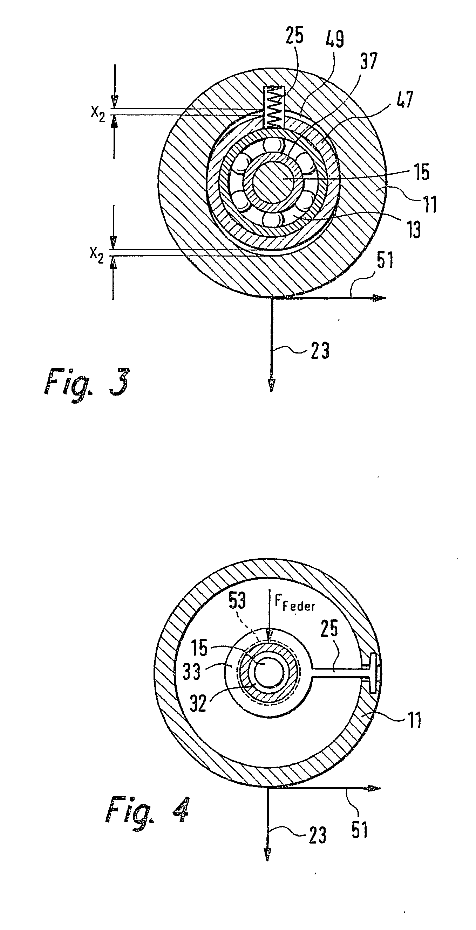

Die Bürste (nicht dargestellt) oder die Drehwinkelsensoren 41 werden bevorzugt in der Nähe des Festlagers 9 angeordnet. Die Anordnung des Loslagers 13 im Gehäuse 11 ist nachfolgend in Fig. 3 im Detail beschrieben.

In Fig. 1 ist der Eingriffswinkel $\alpha_r$ der rechten Zahnflanke (20) eines Zahns 31 des Schneckenrads 19 gleich groß wie der Eingriffswinkel $\alpha_1$ der linken Zahnflanke (22) des Zahns 31. Das Schneckengetriebe 1 wird selbsthemmend ausgeführt, damit sich das Schneckenrad 19 bei stromlosem Elektromotor 3 nicht verdrehen kann. Die Selbsthemmung kann durch geeignete Wahl des Steigungswinkels (nicht dargestellt) der Schnecke 17 und einen hohen Reibungskoeffizienten erreicht, bzw. verbessert werden.

Wenn die Schnecke 17 ein Drehmoment auf das Schneckenrad 19 überträgt, entsteht eine Radialkraft $F_r$ an der Schnecke 17. Die Radialkraft $F_r$ wirkt der Federkraft $F_{Feder}$ des Federelements 25 entgegen. Darüber hinaus entsteht durch die Übertragung des Drehmoments von der Schnecke 17 auf das Schneckenrad 19 auch noch eine Axialkraft $F_A$. Abhängig von der Drehrichtung ändert die Axialkraft $F_A$ ihre Richtung. Das Federelement 25 muss so dimensioniert sein, dass das Anpressmoment

$$F_{Feder} \; x \; a$$

des Federelements 25 größer als das Moment

$$F_R \; x \; b \; - \; F_A \; x \; c$$

ist.

Wenn auf das Schneckenrad 19 über die Abtriebswelle 21 ein Moment M übertragen wird, ergibt sich folgende Momentenbilanz bezüglich der Verzahnung zwischen Schnecke 17 und einem Zahn 31 des Schneckenrads 19:

**Fall 1:** Das Moment M wirkt entgegen dem Uhrzeigersinn (mathematisch positiv):

$$\sum M \; = \; F_{a,r} \; x \; c \; - \; F_{Feder} \; x \; a \; + \; F_{r,\,r} \; x \; b \; = \; 0$$

Mit:

$F_{N,r}$:  Normalkraft zwischen der rechten Zahnflanke 20 des Zahns 31 und der Schnecke 17
$F_{a,r}$:  axiale Komponente von $F_{N,r}$.
$F_{r,r}$:  radiale Komponente von $F_{N,r}$.
a, b, c:  Länge des wirksamen Hebelarms

**Fall 2:** Das Moment M wirkt im Uhrzeigersinn (mathematisch negativ):

$$\sum M = -F_{a,1} \times c - F_{Feder} \times a + F_{r,r} \times b = 0$$

$F_{N,1}$: Normalkraft zwischen der linken Zahnflanke 22 des Zahns 31 und der Schnecke 17

$F_{a,1}$: axiale Komponente von $F_{N,1}$.

$F_{r,1}$: radiale Komponente von $F_{N,1}$.

a, b, c: Länge des wirksamen Hebelarms

Wegen der unterschiedlichen Vorzeichen von $F_{a,r}$ und $F_{a,1}$, ist die Selbsthemmung des in Fig. 1 dargestellten Schneckengetriebes 1 drehrichtungsabhängig. Dieser Effekt ist beispielsweise unerwünscht, wenn das Schneckengetriebe 1 in einer Servoeinheit einer elektrischen Servolenkung, in einem Zahnstangenlenkgetriebe, in einem Lenksteller, in einem Überlagerungsgetriebe und/oder als Lenksteller einer Steer-by-Wire-Lenkanlage eingesetzt wird.

Ein symmetrisches Verhalten des Schneckengetriebes 1 kann erreicht werden, wenn der Eingriffswinkel $\alpha_r$ der rechten Zahnflanke 20 und der Eingriffswinkel $\alpha_1$ der linken Zahnflanke 22 des Zahns 31 verschieden gewählt werden.

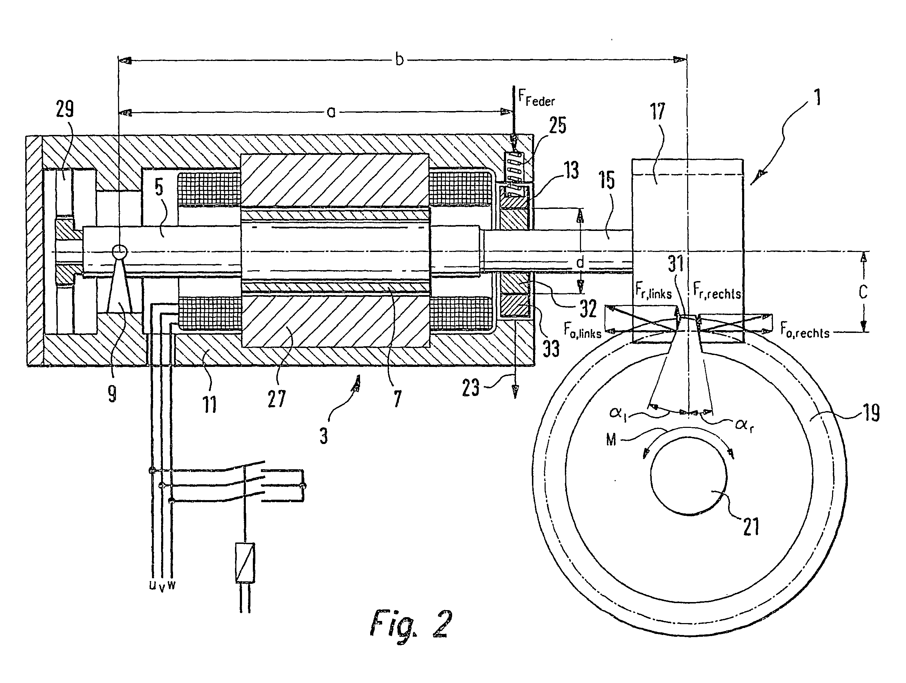

In Fig. 2 ist ein Ausführungsbeispiel eines erfindungsgemäßen Schneckengetriebes 1 schematisch dargestellt. Gleiche Bauteile werden mit gleichen Bezugszeichen versehen und es gilt das bezüglich Fig. 1 Gesagte entsprechend.

Bei der in Fig. 2 dargestellten Verzahnung ist der Eingriffswinkel $\alpha_r$ der rechten Zahnflanke 20 kleiner als der Eingriffswinkel $\alpha_1$ der linken Zahnflanke 22 des Zahns 31. Durch eine geeignete Wahl des rechten und linken Eingriffs-winkels $\alpha_r$ und $\alpha_1$ kann ein drehrichtungsunabhängiges Verhalten des Schneckengetriebes 1 erreicht werden. Dabei beeinflussen die Länge der Hebelarme a, b, und c, sowie die Federkraft $F_{Feder}$ die Wahl der Eingriffswinkel $\alpha_r$ und $\alpha_1$. Prinzipell sollte die Federkraft $F_{Feder}$ so klein wie möglich sein, um Reibung und Verschleiß zu minimieren.

Die Selbsthemmung des Schneckengetriebes 1 kann weiter verbessert werden, wenn das Loslager 13, wie in Fig. 2 dargestellt, als Gleitlager ausgeführt wird. Das Gleitlager besteht aus einer Hülse 32, die mit dem Wellenstumpf 15 verbunden ist, und einer Lagerschale 33, die in Richtung des Pfeils 23 im Gehäuse verschiebbar angeordnet ist. Das Federelement 25 übt eine Kraft $F_{Feder}$ auf die Lagerschale 33 aus, um die gewünschte Spielfreiheit zu gewährleisten. Die Anordnung des als Gleitlager ausgeführten Loslagers 13 im Gehäuse 11 ist nachfolgend in Fig. 4 im Detail beschrieben. Die Hülse 32 kann sich auch über den gesamten Wellenstumpf 15 erstrecken und das Schneckenrad mit der Hülse 32 verbunden sein. Diese Ausgestaltung ist nicht dargestellt.

Wenn das Loslager als Gleitlager ausgeführt ist und die Welle 5 sich nicht dreht, wirkt zwischen Hülse 32 und Lagerschale 33 Gleitreibung. Der Haftreibungskoeffizient $\mu_{Haft}$ ist größer als der Gleitreibungskoeffizient $\mu_{Gleit}$, der für den Reibungswiderstand bei drehender Welle 5 maßgeblich ist. Durch diesen Effekt wird die Selbsthemmung des erfindungsgemäßen Schneckengetriebes 1 weiter verbessert, ohne dass sich für den Antrieb des Schneckengetriebes 1 durch den Elektromotor 3 nennenswerte Nachteile ergeben.

Auch durch die Wahl eines geeigneten Schmiermittels für die Verzahnung des Schneckengetriebes 1 und des Gleitlagers kann dieser Effekt verstärkt werden. Das Schmiermittel soll einerseits einen kleinen Gleitreibungskoeffizient $\mu_{Gleit}$ aufweisen und andererseits bei stehender Welle 5 die Hülse 32 und die Lagerschale 33 sowie die Schnecke 17 und das Schneckenrad 19 möglichst fest verbinden.

Wenn in extremen Ausnahmefällen die Selbsthemmung des Schneckengetriebes 1 nicht ausreichen sollte, und der Elektromotor über die Schnecke angetrieben wird, wird diese Drehbewegung vom Drehwinkelsensor 41 (siehe Fig.1; nicht dargestellt in Fig. 2) detektiert. Ein nicht dargestelltes Steuergerät kann den Elektromotor 3 daraufhin so ansteuern, dass der Elektromotor wieder die ursprüngliche Lage einnimmt und ein Gegenmoment vom Elektromotor 3 aufgebaut wird, so dass das Schneckengetriebe 1 arretiert ist. Diese Arretierung wird im Zusammenhang mit der Erfindung als aktive Arretierung bezeichnet.

Alternativ zu dieser aktiven Arretierung kann die sogenannte elektromotorische Kraft zur sog. passiven Arretierung des Schneckengetriebes 1 benutzt werden, die nachfolgend anhand der Fig. 2 erläutert wird.

In Figur 2 sind die zwei Phasen u, v und w des Elektromotors 3 andeutungsweise dargestellt. Wenn der Elektromotor 3 sich nicht drehen soll, werden nach dem Stand der Technik die drei Phasen u, v und w stromlos geschaltet. In diesem Fall sorgt nur die Selbsthemmung des Schneckengetriebes 1 dafür, dass ein Moment M, welches von dem Schneckenrad 19 in das Schneckengetriebe 1 eingeleitet wird, nicht zur Drehbewegung des Elektromotors 3 führt. Wenn in Extremfällen die Selbsthemmung versagen sollte, kann erfindungsgemäß durch Kurzschließen von mindestens zwei Phasen u, v oder w und Trennen des Elektromotors 3 von der Spannungsversorgung (nicht dargestellt) die elektromotorische Kraft des Elektromotors 3 zur Arretierung des Getriebes ausgenutzt werden. Wenn der Elektromotor kurzgeschlossen ist und er über das Schneckengetriebe angetrieben wird, dann baut der Motor im Generatorbetrieb ein Bremsmoment auf. Dieses Bremsmoment nimmt linear mit der Drehzahl des Elektromotors zu. Schon bei geringer Drehzahl des Motors stellt sich ein Bremsmoment ein, das im Gleichgewicht steht mit dem Moment M, bzw. mit dem Moment, das über die Schnecke 17 auf die Welle 5 des Elektromotors 3 eingeleitet wird. Das Kurzschließen der Phasen u, v und/ oder w kann über ein Relais oder von FET-Halbleiterelementen ausgeführt werden.

Wenn in diesem Zustand am Lenkrad ein Lenkvorgang ausgeführt wird und gleichzeitig die Selbsthemmung des Schneckengetriebes 1 versagt, dreht sich der Elektromotor mit geringer Drehzahl im Generatorbetrieb. Die sich dabei einstellende Drehzahl ist so gering, dass der Lenkvorgang dadurch nicht gefährdet ist und ein sicheres Durchlenken vom Lenkrad zu den gelenkten Rädern gewährleistet ist.

Alternativ kann auch bei Versagen der Selbsthemmung der Elektromotor 3 von einem nicht dargestellten Steuergerät so angesteuert werden, dass der Motor 7 sich nicht dreht und eine Gegenmoment zu dem auf das Schneckenrad 19 wirkenden Moment M aufgebaut wird. Dazu ist es erforderlich, dass ein Drehwinkelsensor 41, wie er in Figur 1 dargestellt ist, vorhanden ist. Am Drehwinkelsensor ist jedoch in der Regel bei einem erfindungsgemäßen Schneckengetriebe für Fahrzeuglenkungen ohnehin vorhanden, da die Position des Lenkgetriebes überwacht werden muss.

Es wird ausdrücklich darauf hingewiesen, dass die erfindungsgemäße asymmetrische Verzahnung und die Verschaltung des Elektromotors 3 auch bei dem in Fig. 1 beschriebenen Schneckengetriebe 1 eingesetzt werden kann.

Figur 3 zeigt eine Schnittdarstellung des Loslagers 13 aus Fig. 1. Der Wellenstumpf 15 ist mit einem Kugellager 37 in einem Stützring 47 gelagert. Der Stützring 47 wiederum wird in einem Langloch 49 des Gehäuses 11 aufgenommen. Das Langloch 49 ist so bemessen, dass in Richtung des Pfeils 23 der Stützring 47 um zweimal die Länge $X_2$ verschoben werden kann. D. h. durch die Länge des Langlochs 49 in radialer Richtung ist der Verschwenkweg $X_2$ festgelegt. Das Federelement 25 wirkt entweder direkt auf den Außenring des Kugellagers 37 oder mittelbar über den Stützring 47 auf den Wellenstumpf 15. In tangentialer Richtung - hier durch einen Pfeil 51 angedeutet - ist das Langloch 49 so bemessen, dass der Stützring 47 spielfrei in das Langloch 49 passt. Das Federelement 25 dient gleichzeitig als Verdrehsicherung, um zu verhindern, dass sich der Stützring 47 im Langloch 49 dreht. Unter Schutz gestellt werden sollen auch andere Ausgestaltungen, die in tangentialer Richtung spielfrei sind und in radialer Richtung eine Verschiebung des Stützrings 47 um zweimal den Betrag $X_2$ erlauben.

Figur 4 zeigt eine Schnittdarstellung eines weiteren Ausführungsbeispiels eines erfindungsgemäßen Loslagers 13 aus Fig. 2. Der Wellenstumpf 15 ist mit einer Hülse 32 verpresst. Die Hülse 32 kann sich in der Lagerschale 33 drehen. Das Federelement 25 ist bei diesem Ausführungsbeispiel als Blattfeder ausgebildet und wird so mit dem Gehäuse 11 verbunden, dass es die gewünschte. Federkraft $F_{Feder}$ auf die Schnecke 17 (siehe Fig. 2) ausübt. Die Lagerschale 33 und das Federelement 25 sind bei dem dargestellten Ausführungsbeispiel einstückig ausgeführt. Der Endanschlag - z. B. bei großen Verzahnungskräften - erfolgt durch eine gestrichelt dargestellte Bohrung 53 im Motorgehäuse 11.

Die Verbindung zwischen Federelement 25 und Gehäuse 11 ist so gestaltet, dass die Federkraft $F_{Feder}$ sowie die in tangentialer Richtung (siehe Pfeil 51) wirkenden Kräfte von dem Federelement 25 sicher übertragen werden können. Dieses Ausführungsbeispiel eines verschiebbaren Loslagers ist besonders günstig in Herstellung, Montage und Funktion. Außerdem ist diese Anordnung in tangentialer Richtung (siehe Pfeil 51) vollkommen spielfrei.

Die Erfindung und ihre Anwendbarkeit ist nicht auf Schneckengetriebe gemäß der Ausführungsbeispiele beschränkt, sondern kann auch bei anderen Bauarten von Getrieben mit Erfolg eingesetzt werden.

**Patentansprüche**

1. Schneckengetriebe für eine Fahrzeuglenkung mit einer in radialer Richtung (23) verschwenkbar gelagerten Welle (5), mit einer auf der Welle (5) drehfest angeordneten Schnecke (17), und mit einem mit der Schnecke (17) kämmenden Schneckenrad (19), wobei Schnecke (17) und Schneckenrad (19) in radialer Richtung vorgespannt sind, **dadurch gekennzeichnet, dass** der Eingriffswinkel $\alpha_r$ der rechten Zahnflanke (20) und der Eingriffswinkel $\alpha_1$ der linken Zahnflanke (22) voneinander verschieden und so gewählt sind, dass der Betrag der Normalkraft ($F_N$) zwischen Schnecke (17) und Schneckenrad (19) unabhängig von dem Drehsinn eines von dem Schneckenrad (19) auf die Schnecke (17) ausgeübten Moments ist.

2. Schneckengetriebe nach Anspruch 1, **dadurch gekennzeichnet, dass** die Welle (5) in einem Gehäuse (11) mittels eines Festlagers (9) und mindestens eines Loslagers (13) gelagert ist, und dass das oder die Loslager (13) in radialer Richtung (23) im Gehäuse (11) verschiebbar sind.

3. Schneckengetriebe nach einem der vorhergehenden Ansprüche, **dadurch gekennzeichnet, dass** das Gehäuse (11) ein Langloch (49) zur Aufnahme des Loslagers (13) aufweist, und dass die Längsachse des Langlochs (49) in radialer Richtung (23) verläuft.

4.  Schneckengetriebe nach einem der vorhergehenden Ansprüche, **dadurch gekennzeichnet, dass** sich das Loslager (13) über einen Stützring (47) gegen das Gehäuse (11) abstützt.

5.  Schneckengetriebe nach einem der vorhergehenden Ansprüche, **dadurch gekennzeichnet, dass** zwischen Loslager (13) und Gehäuse (11) oder zwischen Stützring (47) und Gehäuse (11) mindestens ein Federelement (25) vorgesehen ist.

6.  Schneckengetriebe nach Anspruch 5, **dadurch gekennzeichnet, dass** das Federelement (25) eine Spiralfeder oder eine Tellerfeder ist.

7.  Schneckengetriebe nach einem der vorhergehenden Ansprüche, **dadurch gekennzeichnet, dass** zwischen Loslager (13) und Gehäuse (11) oder zwischen Stützring (47) und Gehäuse (11) eine Verdrehsicherung angebracht ist.

8.  Schneckengetriebe nach einem der Ansprüche 1 oder 2, **dadurch gekennzeichnet, dass** das Loslager (13) über eine Blattfeder mit dem Gehäuse (11) verbunden ist, und dass sich die Blattfeder senkrecht zur Längsachse der Welle (5) und senkrecht zu der Richtung (23) in der das Loslager (13) verschiebbar ist zwischen Gehäuse (11) und Loslager (13) erstreckt.

9.  Schneckengetriebe nach einem der vorhergehenden Ansprüche, **dadurch gekennzeichnet, dass** die Welle (5) die Rotorwelle eines Elektromotors ist.

10. Schneckengetriebe nach einem der vorhergehenden Ansprüche, **dadurch gekennzeichnet, dass** die Schnecke (17) fliegend auf der Welle (5) gelagert ist.

11. Schneckengetriebe nach einem der vorhergehenden Ansprüche, **dadurch gekennzeichnet, dass** die Welle (5) mit Gleitlagern (9) und/oder Wälzlagern (13) in dem Gehäuse (11) gelagert ist.

12. Schneckengetriebe nach einem der vorhergehenden Ansprüch, **dadurch gekennzeichnet, dass** die Antriebswelle (5) von einem Elektromotor (3) antreibbar ist, und dass mindestens zwei Phasen (u, v, w) des Elektromotors (3) kurzgeschlossen werden und der Elektromotor (3) von einer Spannungsversorgung getrennt wird, wenn sich der Elektromotor (3) nicht drehen soll.

13. Schneckengetriebe nach Anspruch 12, **dadurch gekennzeichnet, dass** das Kurzschließen der mindestens zwei Phasen (u, v, w) des Elektromotors (3) durch ein Relais oder durch FET-Halbleiterelemente erfolgt.

14. Verwendung eines Schneckengetriebes nach einem der vorhergehenden Ansprüche, **dadurch gekennzeichnet, dass** das Schneckengetriebe (1) in einer Servoeinheit einer elektrischen Servolenkung, in einem Zahnstangenlenkgetriebe, in einem Lenksteller, in einem Überlagerungsgetriebe und/oder als Lenksteller einer Steer-by-Wire-Lenkanlage eingesetzt wird.


**Claims**

1.  Worm gear mechanism for a vehicle steering system having a shaft (5) which is mounted such that it can pivot in the radial direction (23), having a worm (17) which is arranged fixedly in terms of rotation on the shaft (5), and having a worm gear (19) which meshes with the worm (17), the worm (17) and the worm gear (19) being prestressed in the radial direction, **characterized in that** the engagement angle $\alpha_r$ of the right-hand tooth flank (20) and the engagement angle $\alpha_1$ of the left-hand tooth flank (22) are different from one another and are selected in such a way that the magnitude of the normal force ($F_N$) between the worm (17) and the worm gear (19) is independent of the rotational direction of a moment which is exerted on the worm (17) by the worm gear (19).

2.  Worm gear mechanism according to Claim 1, **characterized in that** the shaft (5) is mounted in a housing (11) by means of a locating bearing (9) and at least one floating bearing (13), and **in that** the floating bearing (13) or the floating bearings (13) can be displaced in the housing (11) in the radial direction (23).

3.  Worm gear mechanism according to one of the preceding claims, **characterized in that** the housing (11) has a slot (49) for receiving the floating bearing (13), and **in that** the longitudinal axis of the slot (49) extends in the radial direction (23).

4. Worm gear mechanism according to one of the preceding claims, **characterized in that** the floating bearing (13) is supported against the housing (11) via a supporting ring (47).

5. Worm gear mechanism according to one of the preceding claims, **characterized in that** at least one spring element (25) is provided between the floating bearing (13) and the housing (11) or between the supporting ring (47) and the housing (11).

6. Worm gear mechanism according to Claim 5, **characterized in that** the spring element (25) is a helical spring or a disc spring.

7. Worm gear mechanism according to one of the preceding claims, **characterized in that** an antirotation safeguard is attached between the floating bearing (13) and the housing (11) or between the supporting ring (47) and the housing (11).

8. Worm gear mechanism according to either of Claims 1 and 2, **characterized in that** the floating bearing (13) is connected to the housing (11) via a leaf spring, and **in that** the leaf spring extends between the housing (11) and the floating bearing (13) perpendicularly with respect to the longitudinal axis of the shaft (5) and perpendicularly with respect to the direction (23), in which the floating bearing (13) can be displaced.

9. Worm gear mechanism according to one of the preceding claims, **characterized in that** the shaft (5) is the rotor shaft of an electric motor.

10. Worm gear mechanism according to one of the preceding claims, **characterized in that** the worm (17) is cantilever-mounted on the shaft (5).

11. Worm gear mechanism according to one of the preceding claims, **characterized in that** the shaft (5) is mounted in the housing (11) by way of sliding bearings (9) and/or roller bearings (13).

12. Worm gear mechanism according to one of the preceding claims, **characterized in that** the drive shaft (5) can be driven by an electric motor (3), and **in that** at least two phases (u, v, w) of the electric motor (3) are short-circuited and the electric motor (3) is disconnected from a voltage supply when the electric motor (3) is not intended to rotate.

13. Worm gear mechanism according to Claim 12, **characterized in that** the at least two phases (u, v, w) of the electric motor (3) are short-circuited by a relay or by FET semiconductor elements.

14. Use of a worm gear mechanism according to one of the preceding claims, **characterized in that** the worm gear mechanism (1) is used in a power unit of an electric power steering system, in a rack-and-pinion steering gear, in a steering actuator, in a variable-ratio gear unit and/or as steering actuator of a steer-by-wire steering system.

**Revendications**

1. Engrenage à vis sans fin pour une direction de véhicule comportant un arbre (5) monté pivotant dans la direction radiale (23), une vis (17) installée solidairement en rotation sur l'arbre (5) et une roue à vis (19) engrenant avec la vis (17),
la vis (17) et la roue à vis (19) étant précontraintes dans la direction radiale,
**caractérisé en ce que**
l'angle d'engrènement ($\alpha r$) du flanc de dent droit (20) et l'angle d'engrènement ($\alpha 1$) du flanc de dent gauche (22) sont différents et sont choisis pour que l'amplitude de la force normale ($F_N$) entre la vis (17) et la roue à vis (19) soit indépendante du sens de rotation d'un couple exercé par la roue à vis (19) sur la vis (17).

2. Transmission à vis selon la revendication 1,
**caractérisée en ce que**
l'arbre (5) est logé dans le boîtier (11) à l'aide d'un palier fixe (19) et d'au moins un palier libre (13) et
le ou les paliers libres (13) coulissent dans la direction radiale (23) dans le boîtier (11).

3. Transmission à vis selon l'une des revendications précédentes,
**caractérisée en ce que**

le boîtier (11) comporte un trou oblong (49) pour recevoir le palier libre (13) et
l'axe longitudinal du trou oblong (49) s'étend dans la direction radiale (23).

4. Transmission à vis selon l'une des revendications précédentes,
   **caractérisée en ce que**
   le palier libre (13) s'appuie contre le boîtier (11) par l'intermédiaire d'une bague d'appui (47).

5. Transmission à vis selon l'une des revendications précédentes,
   **caractérisée par**
   au moins un élément à ressort (25) entre le palier libre (13) et le boîtier (11) ou entre la bague d'appui (47) et le boîtier (11).

6. Transmission à vis selon la revendication 5,
   **caractérisée en ce que**
   l'élément de ressort (25) est un ressort spiral ou un ressort Belleville.

7. Transmission à vis selon l'une des revendications précédentes,
   **caractérisée par**
   un moyen de blocage en rotation entre le palier libre (13) et le boîtier (11) ou entre la bague d'appui (47) et le boîtier (11).

8. Transmission à vis selon l'une des revendications 1 ou 2,
   **caractérisée en ce que**
   le palier libre (13) est relié au boîtier (11) par un ressort-lame coulissant perpendiculairement à l'axe longitudinal de l'arbre (5) et perpendiculairement à la direction (23) dans le palier libre (13), et s'étendant entre le boîtier (11) et le palier libre (13).

9. Transmission à vis selon l'une des revendications précédentes,
   **caractérisée en ce que**
   l'arbre (5) est celui du rotor d'un moteur électrique.

10. Transmission à vis selon l'une des revendications précédentes,
    **caractérisée en ce que**
    la vis (17) est montée flottante sur l'arbre (5).

11. Transmission à vis selon l'une des revendications précédentes,
    **caractérisée en ce que**
    l'arbre (5) est monté dans le boîtier (11) avec des paliers lisses (9) et/ou des paliers à roulement (13).

12. Transmission à vis selon l'une des revendications précédentes,
    **caractérisée en ce que**
    l'arbre d'entraînement (5) est entraîné par un moteur électrique (3) et au moins deux phases (u, v, w) du moteur électrique (3) sont court-circuitées et le moteur électrique (3) est coupé de l'alimentation en tension si le moteur électrique (3) ne doit pas tourner.

13. Transmission à vis selon la revendication 12,
    **caractérisée en ce que**
    la mise en court-circuit d'au moins deux phases (u, v, w) du moteur électrique (3) se fait à l'aide d'un relais ou d'un semi-conducteur FET.

14. Application d'un engrenage à vis sans fin selon l'une des revendications précédentes,
    **caractérisée en ce que**
    l'engrenage à vis sans fin (1) est logé dans une unité d'assistance d'une direction assistée électrique, dans une transmission de barre de direction à crémaillère, dans un actionneur de direction, dans une transmission combinée et/ou comme actionneur de direction d'une installation de guidage par câble.

Fig. 1

EP 1 539 558 B1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9965758 A
- JP 2000043739 A
- DE 19518194 A1
- DE 10051306 A1